# EUROPEAN PATENT APPLICATION

(11) **EP 4 844 463 A1**
(43) Date of publication of application: **25.11.2026**
(21) Application number: 26174707.5
(22) Date of filing: 27.04.2026
(51) Int. Cl.: G02B 6/42, G02B 5/08, G02B 6/12, G02B 6/132, G02B 6/136

(54) **FABRICATION METHODS FOR INTEGRATED PHOTONICS MICRO-MIRRORS**

(30) Priority: 21.05.2025 US 202519214653
(71) Applicant: Honeywell International Inc., Charlotte, NC 28202 (US)
(72) Inventor: PUCKETT, Matthew Wade, Charlotte, 28202 (US); TIN, Steven, Charlotte, 28202 (US); HOYT, Chad, Charlotte, 28202 (US); NELSON, Karl D., Charlotte, 28202 (US); WU, Jianfeng, Charlotte, 28202 (US)
(74) Representative: Haseltine Lake Kempner LLP

(57) **Abstract**

A method of fabricating micro-mirrors comprises providing a substrate layer having a top surface with a first cladding layer formed thereon, wherein a planar waveguide is embedded in the first cladding layer. A trench is formed in the first cladding layer adjacent to the planar waveguide, with the trench formed to have angled sidewalls. A high-reflectivity coating is deposited over the first cladding layer and the angled sidewalls of the trench. The high-reflectivity coating comprises alternating layers of a high refractive index material and a low refractive index material. The high-reflectivity coating is removed from the first cladding layer except where light exiting the planar waveguide will be incident upon the high-reflectivity coating. A second cladding layer is deposited over the first cladding layer and the trench. A remaining high-reflectivity coating forms an angled micro-mirror in an optical path with the planar waveguide.

## Description

### BACKGROUND

In integrated photonics, it is desirable to route light in the vertical direction using optical waveguides to pack structures more densely, resulting in reduced size, weight and power (SWAP) of photonics devices. In coupling light between planar and vertical waveguides, it is necessary to reflect light between these waveguides with high efficiency and across a small area.

### SUMMARY

Methods of fabricating micro-mirrors are described herein. In one method, a substrate layer having a top surface with a first cladding layer formed thereon is provided, and a planar waveguide is embedded in the first cladding layer. A trench is formed in the first cladding layer adjacent to the planar waveguide, with the trench formed to have angled sidewalls. The method further includes depositing a high-reflectivity coating over the first cladding layer and the angled sidewalls of the trench. The high-reflectivity coating comprises alternating layers of a high refractive index material and a low refractive index material. Next, the high-reflectivity coating is removed from the first cladding layer except where light exiting the planar waveguide will be incident upon the high-reflectivity coating. A second cladding layer is then deposited over the first cladding layer and the trench. A remaining high-reflectivity coating embedded in the first and second cladding layers forms an angled micro-mirror in an optical path with the planar waveguide.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1 is a flow diagram of a method for fabricating micro-mirrors, according to one implementation;
Figure 2 illustrates schematic side views of a fabrication process for producing micro-mirrors, according to one exemplary approach;
Figure 3 is a flow diagram of a method for fabricating micro-mirrors, according to another implementation; and
Figure 4 illustrates schematic side views of a fabrication process for producing micro-mirrors, according to another exemplary approach.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

Various fabrication methods for producing integrated photonics micro-mirrors are described herein. The integrated photonics micro-mirrors can be fabricated based on using high-reflectivity coatings, or can be fabricated based on using total internal reflections. The present micro-mirrors can be employed to provide for optical coupling between planar waveguides and either free-space or a vertical waveguides in various photonics devices.

In one implementation, a first fabrication process produces micro-mirrors using high-reflectivity coatings. In general, this first fabrication process begins with forming a planar waveguide through conventional processes on a substrate, and depositing an upper cladding layer thereover. The process then patterns and etches a trench into the upper cladding layer. Next, a high-reflectivity coating is deposited such as with alternating layers of high-refractive index and low-refractive index materials. The process than patterns and removes the high-reflectivity coating except where light will exit the waveguide and be incident upon the high-reflectivity coating. An additional upper cladding layer is then deposited, and can be planarized if necessary. This results in the remaining high-reflectivity coating, embedded in the cladding layer, forming a micro-mirror.

In another implementation, a second fabrication process produces micro-mirrors that are based on total internal reflections. In general, this second fabrication process begins with forming a planar waveguide through conventional processes on a substrate, and depositing an upper cladding layer thereover. This process then patterns and etches an angled trench into the upper cladding layer with an undercut. An additional upper cladding layer is then deposited, and the additional upper cladding layer can then be planarized, if necessary. This results in the trench being embedded in the cladding layers and forming a micro-mirror.

Various optical devices can be produced by using, at least in part, the present fabrication methods. For example, an optical device can comprise at least one angled micro-mirror in an optical path with at least one planar waveguide, and which is formed by the fabrication methods described herein.

The micro-mirrors fabricated by the present methods have the benefits of allowing for dense routing and packaging of integrated photonics. The present micro-mirrors can be used in various photonics devices, such as inertial sensors that use chip-scale optical gyroscopes. The micro-mirrors allow such devices to be produced with reduced form factor and improved performance.

Further details of various embodiments are described hereafter and with reference to the drawings.

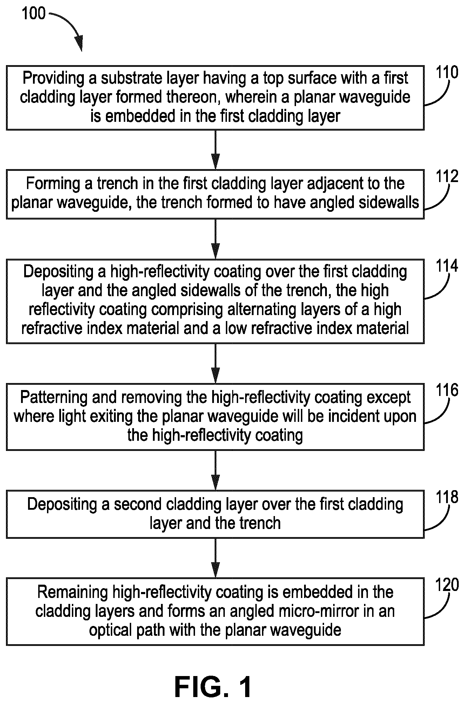

Figure 1 is a flow diagram of a method 100 for fabricating one or more micro-mirrors, according to one implementation. The method 100 comprises providing a substrate layer having a top surface with a first cladding layer formed thereon, wherein a planar waveguide is embedded in the first cladding layer (block 110). In one embodiment, the substrate layer can be a silicon wafer, the first cladding layer can be composed of silicon dioxide, and the planar waveguide can be composed of silicon nitride. The method 100 proceeds by forming at least one trench in the first cladding layer adjacent to the planar waveguide, with the trench formed to have angled sidewalls (block 112). For example, the trench can be formed using a standard pattern and etch process.

The method 100 then deposits a high-reflectivity coating over the first cladding layer and the angled sidewalls of the trench, with the high-reflectivity coating comprising alternating layers of a high refractive index material and a low refractive index material (block 114). Next, the method 100 performs patterning and removing of the high-reflectivity coating except where light exiting the planar waveguide will be incident upon the high-reflectivity coating (block 116). The method 100 then deposits a second cladding layer over the first cladding layer and the trench (block 118). In one embodiment, the second cladding layer can be composed of silicon dioxide. A remaining high-reflectivity coating, embedded in the cladding layers, forms an angled micro-mirror in an optical path with the planar waveguide (block 120).

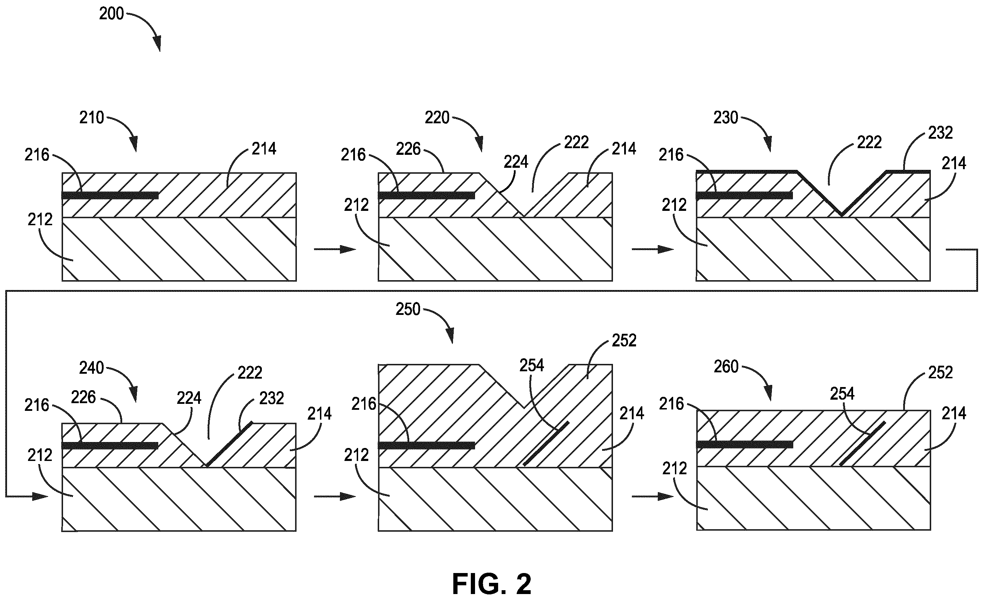

Figure 2 illustrates schematic side views of a fabrication process 200 for producing micro-mirrors, according to one exemplary approach. As shown at 210, a substrate wafer 212 is provided, with a first cladding layer 214 formed over a top surface of the substrate wafer 212 by a standard deposition process. A planar waveguide 216 is embedded in the first cladding layer 214 and is formed by a standard fabrication process, such as a silicon nitride process. In one embodiment, the substrate wafer 212 can be a silicon wafer, and the first cladding layer 214 can be composed of silicon dioxide. The planar waveguide 216 can be composed of silicon nitride, silicon oxynitride, or the like. In one embodiment, the substrate wafer 212 can be coupled to or part of a photonics chip.

As depicted at 220, a trench 222 is formed in the first cladding layer 214 adjacent to the planar waveguide 216. The trench 222 is formed to have angled sidewalls 224 that extend from a top surface 226 of the first cladding layer 214 to the top surface of the substrate wafer 212. In one example, the trench 222 can be formed using a pattern lithography and etch process. The trench 222 can be formed such that the angled sidewalls 224 have an angle of about 30 degrees to about 60 degrees with respect to the top surface of the substrate wafer 212. In one embodiment, the angled sidewalls 224 can have about a 45 degree angle with respect to the top surface of the substrate wafer 212. This angle can be realized through optimization of the pattern lithography and etch process.

As shown at 230, the fabrication process 200 next deposits a high-reflectivity coating 232 over the first cladding layer 214, and over the angled sidewalls 224 of the trench 222. The high-reflectivity coating 232 can comprise alternating layers of a high refractive index material and a low refractive index material corresponding to a high reflectivity at a target wavelength range. For example, the high refractive index material can be silicon nitride, and the low refractive index material can be silicon dioxide. The high-reflectivity coating 232 can be deposited by a standard thin film deposition process, such as plasma enhanced chemical vapor deposition (PECVD), atomic layer deposition (ALD), low pressure chemical vapor deposition (LPCVD), reactive sputtering, or the like. The high-reflectivity coating 232 is formed to provide a high-reflectivity at a target wavelength range of light that is emitted from the planar waveguide 216.

As shown at 240, the fabrication process 200 then selectively removes the high-reflectivity coating 232, except where light will be exiting the planar waveguide 216 and be incident upon the high-reflectivity coating 232. For example, the high-reflectivity coating 232 can be removed from the top surface 226 of the first cladding layer 214 and an angled sidewall 224 where light will be transmitted therethrough from the planar waveguide 216. In one example, the high-reflectivity coating 232 is selectively removed using a pattern lithography and etch process.

As shown at 250, the fabrication process 200 then deposits a second cladding layer 252 over the first cladding layer 214 and the trench 222. For example, the second cladding layer 252 can be deposited using standard deposition techniques such as PECVD, or the like. This results in an angled micro-mirror 254 in an optical path with the planar waveguide 216 and embedded in the cladding layers 214, 252.

Finally, as depicted at 260, the fabrication process 200 can perform planarizing of the second cladding layer 252 by a polishing process, such as chemical mechanical planarization (CMP). This provides an optical device comprising the angled micro-mirror 254 in the optical path with the planar waveguide 216.

While the fabrication process 200 shows the fabrication of a single micro-mirror, it should be understood that this process can be used to form multiple micro-mirrors and waveguides in a substrate wafer.

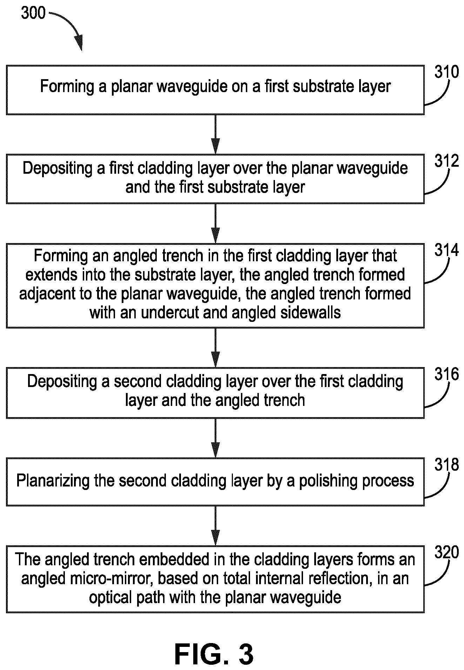

Figure 3 is a flow diagram of a method 300 for fabricating one or more micro-mirrors, according to another implementation. The method 300 comprises forming a planar waveguide on a substrate layer (block 310), and depositing a first cladding layer over the planar waveguide and the substrate layer (block 312). In one embodiment, the substrate layer can be a silicon wafer, the first cladding layer can be composed of silicon dioxide, and the planar waveguide can be composed of silicon nitride.

The method 300 proceeds by forming an angled trench in the first cladding layer that extends into the substrate layer, with the angled trench formed adjacent to the planar waveguide; the angled trench is formed with an undercut and angled sidewalls (block 314). The method 300 next deposits a second cladding layer over the first cladding layer and the angled trench (block 316), and planarizes the second cladding layer such as by a polishing process (block 318). In one embodiment, the second cladding layer can be composed of silicon dioxide. The angled trench embedded in the cladding layers forms an angled micro-mirror, based on total internal reflection, in an optical path with the planar waveguide (block 320).

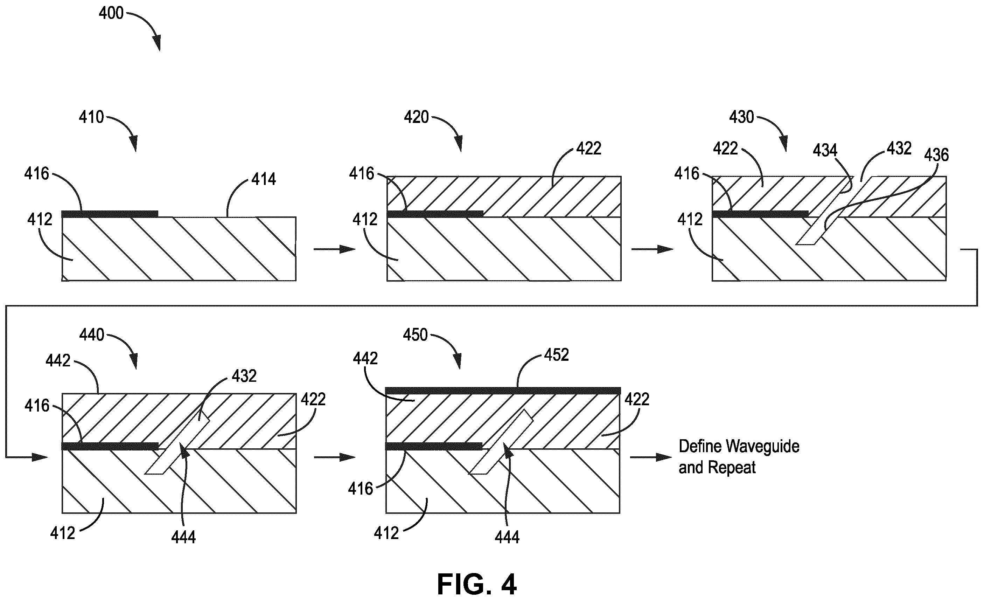

Figure 4 illustrates schematic side views of a fabrication process 400 for producing micro-mirrors, according to another exemplary approach. As shown at 410, a substrate wafer 412 is provided and has a top surface 414. A planar waveguide 416 is formed on the top surface 414 of the substrate wafer 412, such as by standard fabrication processes. In one embodiment, the substrate wafer 212 can be a silicon wafer, and the planar waveguide 416 can be a silicon nitride waveguide. In an example embodiment, the substrate wafer 412 can be coupled to or part of a photonics chip.

As depicted at 420, a first cladding layer 422 is deposited over the planar waveguide 416 and the top surface 414 of the substrate wafer 412. In one embodiment, the first cladding layer 422 can be composed of silicon dioxide, aluminum oxide, or the like. The first cladding layer 422 can be deposited by standard deposition techniques such as PECVD, or the like.

As depicted at 430, the fabrication process 400 next forms an angled trench 432 in the first cladding layer 422 that extends into the substrate wafer 412. The angled trench 432 is formed adjacent to the planar waveguide 416. The angled trench 432 is formed with an undercut portion 434 and angled sidewalls 436. The angled trench 432 can be formed using a lithography and angled etch process, such as by using angled reactive ion etching (RIE) or angled ion milling. The angled trench 432 can be formed such that the angled sidewalls 436 have an angle of about 30 degrees to about 60 degrees with respect to a top surface of the first cladding layer 422.

As depicted at 440, the fabrication process 400 then deposits a second cladding layer 442 over the first cladding layer 422 and the angled trench 432, In one embodiment, the second cladding layer 442 can be composed of silicon dioxide, aluminum oxide, or the like. The second cladding layer 442 can be deposited by standard deposition techniques such as PECVD, or the like. The deposition of second cladding layer 442 can be adjusted to provide poor conformality and step coverage of the deposited material, to provide an embedded micro-mirror 444. The second cladding layer 442 can be planarized by a polishing process such as by using chemical mechanical planarization (CMP). The embedded micro-mirror 444 is based on total internal reflection and is in an optical path with the planar waveguide 416.
As depicted at 450, a waveguide layer 452 such as a nitride layer can be deposited over the second cladding layer 442 by a standard deposition process. A planar waveguide such as a silicon nitride waveguide, similar to the planar waveguide 416, can then be defined in the waveguide layer 452. The fabrication process 400 can then be repeated as desired to form one or more additional embedded micro-mirrors, similar to embedded micro-mirror 444.

### Example Embodiments

Example 1 includes a method comprising: providing a substrate layer having a top surface with a first cladding layer formed thereon, wherein a planar waveguide is embedded in the first cladding layer; forming a trench in the first cladding layer adjacent to the planar waveguide, the trench formed to have angled sidewalls; depositing a high-reflectivity coating over the first cladding layer and the angled sidewalls of the trench, the high-reflectivity coating comprising alternating layers of a high refractive index material and a low refractive index material; removing the high-reflectivity coating from the first cladding layer except where light exiting the planar waveguide will be incident upon the high-reflectivity coating; and depositing a second cladding layer over the first cladding layer and the trench; wherein a remaining high-reflectivity coating embedded in the first and second cladding layers forms an angled micro-mirror in an optical path with the planar waveguide.

Example 2 includes the method of Example 1, wherein the trench is formed by a pattern lithography and etch process.

Example 3 includes the method of any of Examples 1-2, wherein the trench is formed such that the angled sidewalls have an angle of about 30 degrees to about 60 degrees with respect to the top surface of the substrate layer.

Example 4 includes the method of any of Examples 1-3, wherein the substrate layer comprises a silicon wafer; the planar waveguide comprises silicon nitride or silicon oxynitride; and the first and second cladding layers comprise silicon dioxide.

Example 5 includes the method of any of Examples 1-4, wherein the high refractive index material of the high-reflectivity coating comprises silicon nitride.

Example 6 includes the method of any of Examples 1-5, wherein the low refractive index material of the high-reflectivity coating comprises silicon dioxide.

Example 7 includes the method of any of Examples 1-6, wherein the high-reflectivity coating is deposited by a process comprising plasma enhanced chemical vapor deposition

(PECVD), atomic layer deposition (ALD), low pressure chemical vapor deposition (LPCVD), or reactive sputtering.

Example 8 includes the method of any of Examples 1-7, wherein the high-reflectivity coating is selectively removed from the first cladding layer by a pattern lithography and etch process.

Example 9 includes the method of any of Examples 1-8, wherein the high-reflectivity coating provides a high reflectivity at a target wavelength range of light exiting the planar waveguide.

Example 10 includes the method of any of Examples 1-9, further comprising planarizing the second cladding layer by a polishing process.

Example 11 includes the method of Example 10, wherein the polishing process comprises chemical mechanical planarization (CMP).

Example 12 includes the method of any of Examples 1-11, wherein the substrate layer is coupled to or part of a photonics chip.

Example 13 includes an optical device comprising: at least one angled micro-mirror in an optical path with at least one planar waveguide, and formed by the method of any of Examples 1-12.

Example 14 includes a method comprising: forming a planar waveguide on a substrate layer; depositing a first cladding layer over the planar waveguide and the substrate layer; forming an angled trench in the first cladding layer that extends into the substrate layer, the angled trench formed adjacent to the planar waveguide, the angled trench formed with an undercut and angled sidewalls; depositing a second cladding layer over the first cladding layer and the angled trench; and planarizing the second cladding layer by a polishing process; wherein the angled trench forms an embedded micro-mirror, based on total internal reflection, in an optical path with the planar waveguide.

Example 15 includes the method of Example 14, wherein the angled trench is formed using pattern lithography, and an angled etch process comprising reactive ion etching (RIE) or angled ion milling.

Example 16 includes the method of any of Examples 14-15, wherein the angled trench is formed such that the angled sidewalls have an angle of about 30 degrees to about 60 degrees with respect to a top surface of the first cladding layer.

Example 17 includes the method of any of Examples 14-16, wherein the substrate layer comprises a silicon wafer; the planar waveguide comprises silicon nitride; and the first and second cladding layers comprise silicon dioxide or aluminum oxide.

Example 18 includes the method of any of Examples 14-17, wherein the polishing process comprises chemical mechanical planarization (CMP).

Example 19 includes the method of any of Examples 14-18, wherein the substrate layer is coupled to or part of a photonics chip.

Example 20 includes an optical device comprising: at least one angled micro-mirror in an optical path with at least one planar waveguide, and formed by the method of any of Examples 14-19.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. A method comprising:
providing a substrate layer having a top surface with a first cladding layer formed thereon, wherein a planar waveguide is embedded in the first cladding layer;
forming a trench in the first cladding layer adjacent to the planar waveguide, the trench formed to have angled sidewalls;
depositing a high-reflectivity coating over the first cladding layer and the angled sidewalls of the trench, the high-reflectivity coating comprising alternating layers of a high refractive index material and a low refractive index material;
removing the high-reflectivity coating from the first cladding layer except where light exiting the planar waveguide will be incident upon the high-reflectivity coating; and
depositing a second cladding layer over the first cladding layer and the trench;
wherein a remaining high-reflectivity coating embedded in the first and second cladding layers forms an angled micro-mirror in an optical path with the planar waveguide.

2. The method of claim 1, wherein the trench is formed by a pattern lithography and etch process.

3. The method of claim 1, wherein the trench is formed such that the angled sidewalls have an angle of about 30 degrees to about 60 degrees with respect to the top surface of the substrate layer.

4. The method of claim 1, wherein:
the substrate layer comprises a silicon wafer;
the planar waveguide comprises silicon nitride or silicon oxynitride; and
the first and second cladding layers comprise silicon dioxide.

5. The method of claim 1, wherein the high refractive index material of the high-reflectivity coating comprises silicon nitride, and the low refractive index material of the high-reflectivity coating comprises silicon dioxide.

6. The method of claim 1, wherein the high-reflectivity coating is deposited by a process comprising plasma enhanced chemical vapor deposition (PECVD), atomic layer deposition (ALD), low pressure chemical vapor deposition (LPCVD), or reactive sputtering.

7. The method of claim 1, wherein the high-reflectivity coating is selectively removed from the first cladding layer by a pattern lithography and etch process.

8. The method of claim 1, wherein the high-reflectivity coating provides a high reflectivity at a target wavelength range of light exiting the planar waveguide.

9. The method of claim 1, further comprising planarizing the second cladding layer by a polishing process.

10. The method of claim 9, wherein the polishing process comprises chemical mechanical planarization (CMP).

11. The method of claim 1, wherein the substrate layer is coupled to or part of a photonics chip.

12. An optical device comprising:
at least one angled micro-mirror in an optical path with at least one planar waveguide, and formed by the method of claim 1.

13. A method comprising:
forming a planar waveguide on a substrate layer;
depositing a first cladding layer over the planar waveguide and the substrate layer;
forming an angled trench in the first cladding layer that extends into the substrate layer, the angled trench formed adjacent to the planar waveguide, the angled trench formed with an undercut and angled sidewalls;
depositing a second cladding layer over the first cladding layer and the angled trench; and
planarizing the second cladding layer by a polishing process;
wherein the angled trench forms an embedded micro-mirror, based on total internal reflection, in an optical path with the planar waveguide.

14. The method of claim 13, wherein the angled trench is formed using pattern lithography, and an angled etch process comprising reactive ion etching (RIE) or angled ion milling.

15. An optical device comprising:
at least one angled micro-mirror in an optical path with at least one planar waveguide, and formed by the method of claim 13.
